# EUROPÄISCHE PATENTSCHRIFT

(11) **EP 0 949 054 B1**
(45) Veröffentlichungstag und Bekanntmachung des Hinweises auf die Patenterteilung: **12.12.2001**
(21) Anmeldenummer: 99250028.0
(22) Anmeldetag: 26.01.1999
(51) Int. Cl.: B29C 45/24, B29C 45/17, B29C 45/57

(54) **Verfahren und Vorrichtung zum Filtern von Kunststoffen in Spritzgiessmaschinen**
Method and apparatus for filtering plastic materials in injection moulding machines
Procédé et dispositif pour filtrer des matières plastiques dans les machines à mouler par injection

(30) Priorität: 11.03.1998 DE 19811273
(43) Veröffentlichungstag der Anmeldung: 13.10.1999
(73) Patentinhaber: Demag Ergotech GmbH, 90571 Schwaig (DE)
(72) Erfinder: Straka, Rudolf, 90449 Nürnberg (DE)
(74) Vertreter: Henze, Lothar, Dipl.-Ing.

(56) Entgegenhaltungen:
- WO-A-95/10404
- GB-A- 1 047 533
- US-A- 3 709 644
- US-A- 4 416 605
- US-A- 5 439 589
- PATENT ABSTRACTS OF JAPAN vol. 95, no. 4, 31. Mai 1995 & JP 07 024877 A (JAPAN STEEL WORKS LTD), 27. Januar 1995

## Beschreibung

Die Erfindung betrifft ein Verfahren zum Filtern von Kunststoffen in Spritzgießmaschinen, bei denen zwischen der Plastifiziereinheit und dem Formhohlraum eine ein Filterelement aufnehmende Haltevorrichtung angeordnet ist, und eine entsprechende Einrichtung dazu.

Aus Kunststoffe 87 (1997), Seiten 154-159, ist ein Siebsystem bekannt (Seite 156), bei dem die Siebstellen in einen recheckförmigen Schieber (Kassette) oder einen runden Bolzen eingelassen sind. Über einen hydraulischen Antrieb wird per Handauslösung oder automatisch bei Erreichen einer definierten Druckgrenze durch Verschieben der Siebflächenträger der Wechsel ausgelöst.

Solche Siebwechselsysteme sind in der Kunststoffverarbeitung, und hier inbesondere in der Extrusion, im Einsatz. Probleme treten hier gerade bei nicht ausdrücklich druckkonstanten Wechselsystemen auf, da das kontinuierliche Zusetzen der Siebfläche und deren Austausch mit teilweise enormen Druckschwankungen vor dem Filter einhergeht.

Aus DE 44 19 284 C1 ist eine Filtervorrichtung für Kunststoffschmelzen bekannt, bei der Siebeinsätze in einem kraftbetriebenen verschiebbaren Schieber angeordnet sind. Zu beiden Seiten des Schiebers sind Dichtungen angeordnet, wobei mindestens eine der Dichtungen einen aus Metall bestehenden Dichtkörper aufweist, der einen Hohlraum umschließt, welcher mit einem Stoff gefüllt ist, dessen thermischer Ausdehnungskoeffizient den des Materials des Dichtkörpers überschreitet. Beim Einsetzen der Dichtung ist deren aus Metall, beispielsweise aus Edelstahl bestehender Dichtkörper praktisch entspannt. Durch Erwärmung durch die hindurchfließende Kunststoffschmelze wird der Dichtkörper inklusive des ihn füllenden Stoffes thermisch expandiert, so daß im Betrieb nach der thermischen Ausdehnung bzw. Verformung sich die Stirnfläche der Dichtung fest und dichtend gegen den Schieber legt.

Nachteil dieser Dichtungsform ist seine Abhängigkeit vom Druck und von der Temperatur der verarbeiteten Kunststoffmasse, da sich beide Werte in ungewollter Weise verstärkend addieren, daß also bei niedriger Temperatur und geringem Druck Undichtigkeiten auftreten und bei hohem Druck und hoher Temperatur unerwünscht hohe Flächenpressungen bei den Auflageflächen auftreten.

Die Erfindung hat sich das Ziel gesetzt, ein Verfahren und eine entsprechende Vorrichtung zum Filtern von Kunststoffen in Spritzgießmaschinen zu schaffen, bei der mit einfachen und konstruktiven Mitteln bei hohen Massedrücken ein sicheres Entfernen von Störstoffen aus der Kunststoffmasse gewährleistet ist.

Die Erfindung erreicht dieses Ziel durch die kennzeichnenden Merkmale des Verfahrensanspruchs 1 und des Vorrichtungsanspruchs 4. Die übrigen Ansprüche sind vorteilhafte Weiterbildungen der Erfindung.

Erfindungsgemäß wird beim Filterwechsel ein vorgewärmtes Filterelement eingesetzt, welches mit Kunststoffmasse beaufschlagt wird, die so lange vom Formhohlraum ferngehalten wird, bis die Gießmasse als geeignet erkannt und damit fehlerfrei der Verarbeitung zugeführt wird.

Hierzu ist in der Verbindungsleitung zwischen der Plastifiziereinheit und der mit dem Formhohlraum verbundenen Düse ein 3-Wege-Hahn vorgesehen, mit den Arbeitspositionen:
- Durchgang zum im Werkzeug befindlichen Formhohlraum
- Sperrstellung
- Spülstellung mit dem Masseausfluß nach außen, vorzugsweise nach unten.

Die Sperrstellung des Absperrorgans verhindert jegliche Beeinflussung des Filters und der Schnecke aus dem Werkzeug oder Verteilersystems, z.B. Heißkanal bei Mehrkomponenten u.ä.

Die Spülstellung ermöglicht nach dem Wechseln der Filtereinheiten insbesondere das Ausspritzen des Luftvolumens und der alten Masse beim Anfahren der Spritzgießmaschine und bei Filterwechsel.

Erfindungsgemäß ist darüber hinaus eine Vorwärmeinheit für frische Filterelemente vorgesehen. Hierzu ist der Schieber, in dem der aktive Filter gelagert ist, verschiebbar und in eine Position verfahrbar, bei der seine Aufnahme des Filterelementes mit einer kolbenförmigen Verschiebeeinheit korrespondiert, durch die das verbrauchte Filterelement ausstoßbar und gleichzeitig das frische Filterelement einsetzbar ist.

Die Verschiebeeinheit besitzt im Bereich der Filterhalterung eine Vorheizeinrichtung, durch die die Filterelemente auf Betriebstemperatur vorheizbar sind. Durch das Vorheizen wird verhindert, daß beim nächsten Spritzhub die Masse im frischen Filtersieb sofort einfriert und die Produktion unterbrochen wird.

Zum Filterwechsel wird also der als Trägerplatte ausgestaltete Schieber mit der verschmutzten Filtereinheit nach oben aus dem Filterkopf herausgezogen. Mittels des Kolbens der Verschiebeeinheit wird das vorgewärmte Filterelement in die Trägerplatte eingeschoben. Dabei wird das verschmutzte Element auf der Gegenseite auf eine Auffangrinne ausgeworfen.

In einer vorteilhaften Weiterbildung der Erfindung wird das Filterelement auch in seiner Betriebsstellung thermisch beeinflußt. Hierzu ist im Schieber im Bereich der Aufnahme des Filterelementes eine Filterbeheizung vorgesehen.

Der das Filterelement aufnehmende Schieber soll zum Wechsel leicht bewegbar sein, während des Betriebes aber dicht schließend gehalten werden und keine Leckagen zulassen. Hierzu ist es bekannt, zu beiden Seiten des Schiebers Dichtungsringe vorzusehen. Im vorliegenden Fall ist auf der der Plastifiziereinheit zugeneigten Seite zwischen Schieber und Gehäuse ein mindestens zweiteiliger Dichtungsring vorgesehen, der in Abhängigkeit von in dem Kanal vorliegenden Massedruck entweder spielfrei oder gegen den Schieber pressbar ist.

Hierzu ist der eine Dichtungsteil des Dichtungsringes dachförmig ausgestaltet, während der andere eine Dreiecksform besitzt, wobei beide sich über eine schräge Fläche berühren. Beide Ringteile sind dabei ausschließlich aus Metall, wobei mindestens der dachförmige Dichtring vorzugsweise aus hochelastischem Werkstoff gefertigt ist. Im drucklosen Zustand sind beide Dichtringe zurückgefedert und lehnen leicht vorgespannt gegeneinander. Bei steigendem Massedruck vergrößert sich beim dachförmigen Dichtring der Durchmesser, wobei seine dem dreieckigen Dichtring zugeneigte schräge Fläche während seines radialen Öffnens den dreieckigen Dichtring axial bewegt und gegen den Schieber presst. Der Winkel der sich berührenden schrägen Flächen beider Dichtungsteile ist so gewählt, daß sich diese nicht verkeilen und im drucklosen Zustand in ihre Ausgangsposition zurückfedern.

Als Material wurde ein Metall mit geringem E-Modul vorgesehen, das die erforderliche Verformung begünstigt.

In einer weiteren vorteilhaften Ausgestaltung ist das in der Verbindungsleitung vorgesehene Absperrorgan als 3-Wege-Hahn ausgestaltet und mit einem Speicher verbindbar. Durch diesen Speicher kann die qualitativ als gut befundene Spritzgießmasse bezüglich ihres Druckes und ihrer Menge noch beeinflußt werden. Hierzu ist der Speicher als Kolben-Zylinder-Einheit ausgestaltet, welche bei dem hydraulischen oder elektrischen Antrieb betreibbar ist. Die Kolbenstange der Kolben-Zylinder-Einheit ist dabei thermisch getrennt, so daß keine negative Beeinflussung der Spritzgießmasse eintritt.

Ein Beispiel der Erfindung ist in der beigefügten Zeichnung dargelegt. Dabei zeigt die
- Figur 1: Ein Schema einer Spritzgießeinheit.
- Figur 2: Einen Ausschnitt einer Spritzgießeinheit mit einer Filterwechsel- und Absperrvorrichtung.
- Figur 3: Eine Spritzgießeinheit mit Filter und Speicher.

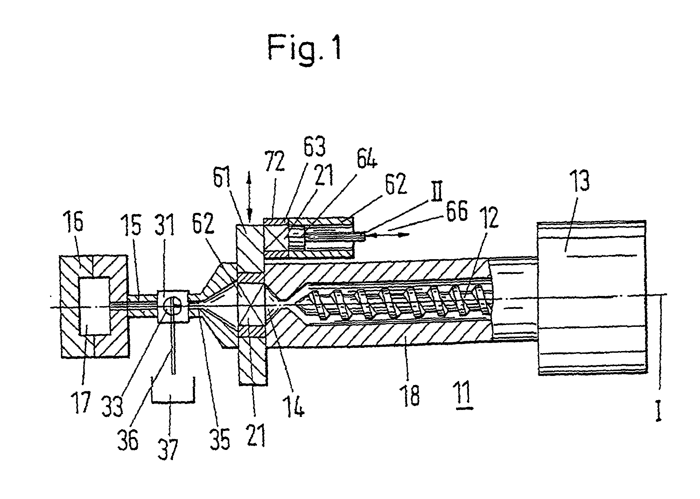

Die Figur 1 zeigt eine Spritzgießeinheit mit einer Plastifiziereinheit 11, in der eine Schnecke 12 über einen Schneckenantrieb 13 angetrieben wird. Das Gehäuse 18 der Plastifiziereinheit 11 weist mündungsseitig einen Kanal 14 auf, der über eine Verbindungsleitung 35 mit einer Düse 15 in Verbindung steht, über die Spritzgießmasse zum Formhohlraum 17 eines Werkzeugs 16 geführt wird.

Im Bereich des Kanals 14 ist ein Schieber 61 angeordnet, der eine Aufnahme 62 für eine Filterelement 21 besitzt, wobei der Schieber 61 senkrecht zur Hauptachse I verfahrbar ist.

Die Aufnahme 62 für das Filterelement 21 ist von einer Filterbeheizung 72 umhüllt.

Der Schieber 61 korrespondiert bei seiner Filterwechselstellung mit einer kolbenförmigen Verschiebereinheit 66, deren Nebenachse II parallel zur Hauptachse I angeordnet ist und im Mündungsbereich eine Filterhalterung 63 besitzt, in der ein frisches Filterelement 21 einsetzbar ist.

Zum Filterwechseln wird das Zentrum der Aufnahme 62 von der Hauptachse I der Plastifiziereinheit 11 zur Nebenachse II der Verschiebereinheit 66 verschoben. Durch Verfahren einer in der Verschiebereinheit 66 angeordneten Kolben-Zylinder-Einheit 64 wird das Filterelement 21 aus der Filterhalterung 63 in die Aufnahme 62 des Schiebers 61 gebracht, wobei das verbrauchte Filterelement (hier nicht dargestellt) aus dem Schieber 61 entfernt wird.

Die Filterhalterung 63 weist eine Vorheizeinrichtung 71 auf, durch die frische Filterelemente 21 auf Betriebstemperatur bringbar sind.

Die frischen Filterelemente 21 werden über ein nicht weiter dargestelltes Magazin der Filterhalterung 63 zugeführt.

In Materialströmungsrichtung dem Schieber nachgeordnet ist in der Verbindungsleitung 35 ein Absperrorgan 31 vorgesehen, welches als 3-Wege-Hahn 33 ausgestaltet ist. In einer Stellung ist der Kanal 14 und damit das gefilterte Material mit dem Formhohlraum 17, in einer weiteren Stellung ist der Kanal 14 über eine Abzweigung 36 mit einem Abspritzbehältnis 37 verbunden.

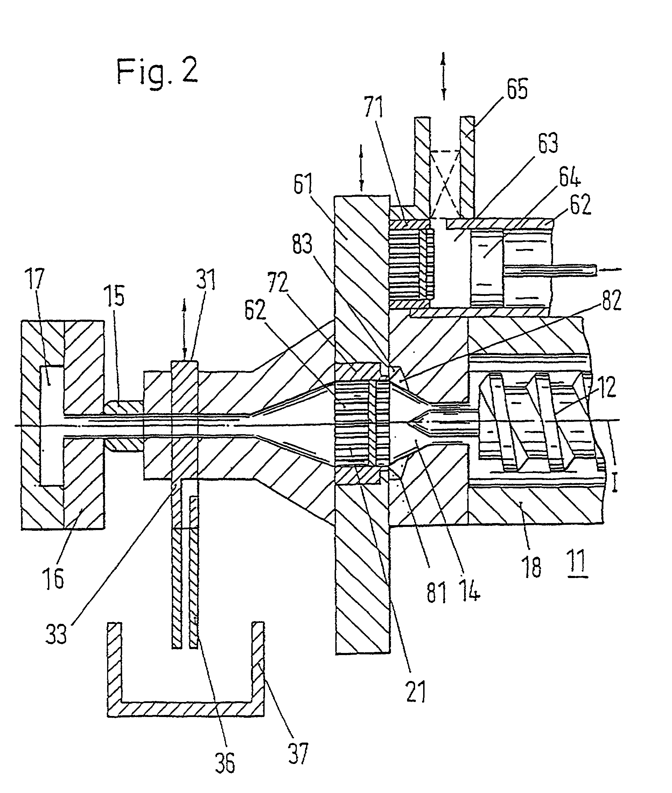

Die Figur 2 zeigt einen Ausschnitt aus der Figur 1 im Bereich des Schiebers 61 und des Absperrorgans 31. Das Absperrorgan 31 ist hier als Schieber ausgestaltet mit der Stellung Durchgang, Gesperrt und Umlenken.

Weiterhin ist in der Figur 2 ergänzend zur Figur 1 der Dichtungsring 81 dargestellt. Der Dichtungsring 81 besteht aus zwei Dichtungsteilen, und zwar einem dachförmigen Dichtungsteil 82 und einem dreieckigen Dichtungsteil 83, die sich über eine komplette Fläche berühren.

Durch den Innendruck der in dem Kanal 14 befindlichen Materialmasse wird der dachförmige Teil 82 aufgeweitet, wobei durch die Vergrößerung des Durchmessers eine keilförmige Verbindung der Berührungsflächen zum dreieckigen Dichtungsteil 83 besteht. Hierdurch wird der dreieckige Dichtungsteil 83 mit hoher Kraft gegen den Schieber 61 gedrückt. Hierdurch wird ein Abströmen von Kunststoffmasse aus dem Kanal über die Berührungsfläche Gehäuse 18 und Schieber 61 sicher verhindert.

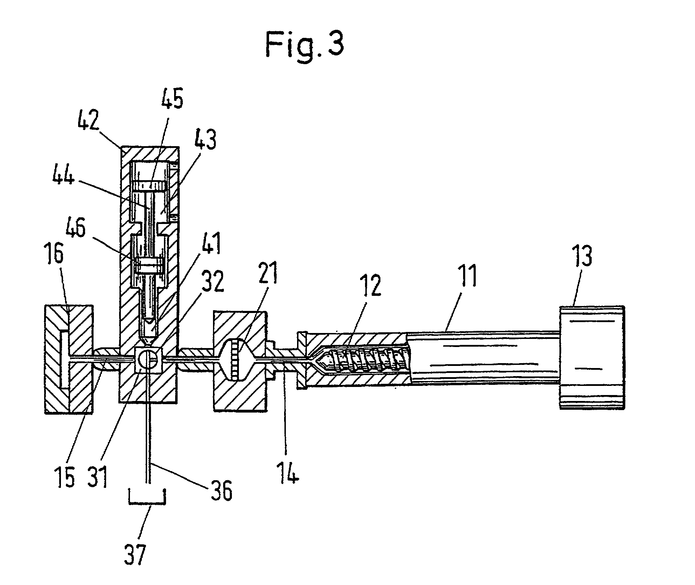

Die Figur 3 zeigt eine Spritzgießeinheit, bei der ergänzend zu der Abzweigung 36 ein Speicher 41 mit dem Absperrorgan 31 in Verbindung steht.

Der Speicher 41 weist ein Verstellelement 42 auf, welches als Kolben-Zylinder-Einheit 43 ausgebildet ist. Die Kolbenstange 44 der Kolben-Zylinder-Einheit ist an einen hydraulischen Antrieb oder einen elektrischen Antrieb (hier nicht dargestellt) anschließbar.

Die Kolbenstange 44 besteht in einem Bereich aus einem Material 46, durch das der Kolben 45 von dem Antrieb thermisch trennbar ist.

### Positionsliste

### Spritzgießen

- 11: Plastifiziereinheit
- 12: Schnecke
- 13: Schneckenantrieb
- 14: Kanal
- 15: Düse
- 16: Werkzeug
- 17: Formhohlraum
- 18: Gehäuse

### Filtern

- 21: Filterelement
- 22: Verbrauchtes Filterelement
- 23: Filtergehäuse

### Sperren

- 31: Absperrorgan
- 32: Kugelhahn
- 33: 3-Wege-Hahn
- 34: Rückschlagventil
- 35: Verbindungsleitung
- 36: Abzweigung
- 37: Abspritzbehältnis

### Speichern

- 41: Speicher
- 42: Verstellelement
- 43: Kolben-Zylinder-Einheit
- 44: Kolbenstange
- 45: Kolben
- 46: Thermisches Trennmaterial

### Antreiben

- 51: Hydraulischer Antrieb
- 52: Elektrischer Antrieb

### Verschieben

- 61: Schieber
- 62: Aufnahme des Filterelementes
- 63: Filterhalterung
- 64: Kolben-Zylinder-Einheit
- 65: Magazin
- 66: Kolbenförmige Verschiebeeinheit

### Heizen

- 71: Vorheizeinrichtung
- 72: Filterbeheizung

### Dichten

- 81: Dichtungsring
- 82: Dachförmiger Dichtungsteil
- 83: Dreieckiger Dichtungsteil

- I: Hauptachse
- II: Nebenachse

## Patentansprüche

1. Verfahren zum Filtern von Kunststoffen in Spritzgießmaschinen, bei denen zwischen der Plastifiziereinheit (11) und dem Formhohlraum (17) eine ein Filterelement (21) aufnehmende Haltevorrichtung angeordnet ist, **gekennzeichnet durch** folgende Schritte:
a) das frische Filterelement (21) wird vorgewärmt in Bereitschaft gehalten
b) das aus dem Massekanal ausgefahrene verbrauchte Filterelement (22) wird an der selben Position gegen das frische Element (21) getauscht
c) das frische Filterelement (21) wird in den Massekanal eingefahren und mit Gießmasse beaufschlagt, die vor dem Formhohlraum (17) in ein Abspritzbehältnis (37) umgelenkt wird
d) der Schritt c) wird so lange wiederholt, bis die Gießmasse als geeignet erkannt dem Formhohlraum (17) direkt zugeführt wird
e) nach jedem Schuß wird die Zuleitung zum Formhohlraum (17) geschlossen
f) der Gießvorgang wird wiederholt, bis das Filterelement (21) verbraucht ist.

2. Verfahren nach Anspruch 1,
**dadurch gekennzeichnet,**
**daß** auf die Gießmasse während ihres Durchtritts durch das Filterelement (21) thermisch Einfluß genommen wird.

3. Verfahren nach Anspruch 2,
**dadurch gekennzeichnet,**
**daß** die sich im Filter befindliche Gießmasse von außen ringförmig erwärmt wird.

4. Einrichtung zum Filtern von Kunststoffen in Spritzgießmaschinen mit einer Plastifiziereinheit (11), einer mit einem Formhohlraum (17) verbundenen Düse (15) und einem in der Verbindungsleitung (35) in einem Kanal (14) zwischen der Plastifiziereinheit (11) und der Düse (15) angeordneten Filterelement (21), das in einem Schieber (61) gelagert ist, zur Durchführung des Verfahrens nach Anspruch 1,
**dadurch gekennzeichnet,**
**daß** in der Verbindungsleitung (35) in Materialförderrichtung nach dem Filterelement (21) ein 3-Wege-Hahn (33) mit einer Abzweigung (36) angebracht ist,
**daß** in einer Schaltstellung der 3-Wege-Hahn (33) die Plastifiziereinheit (11) über die Abzweigung (36) mit einem Abspritzbehältnis (37) verbindet,
**daß** der Schieber (61) senkrecht zur Hauptachse (i) der Verbindungsleitung (35) verschiebbar und in eine Position bringbar ist, bei der seine Aufnahme für das Filterelement außerhalb des Massekanals mit einer kolbenförmigen Verschiebeeinheit (66) korrespondiert, durch die das verbrauchte Filterelement (22) ausstoßbar und ein frisches Filterelement (21) einsetzbar ist, und
**daß** die Verschiebeeinheit (66) im Bereich der Filterhalterung (63) eine Vorheizeinrichtung (71) aufweist.

5. Einrichtung nach Anspruch 4,
**dadurch gekennzeichnet,**
**daß** der Schieber (61) im Bereich der Aufnahme (62) des Filterelementes (21) eine Filterbeheizung (72) aufweist.

6. Einrichtung nach Anspruch 4,
**dadurch gekennzeichnet,**
**daß** sich im Gehäuse (18) an der Mündung des Kanals (14) auf der der Plastifiziereinheit (11) zugewandten Seite ein mindestens zweigeteilter Dichtungsring (81) abstützt, der in Abhängigkeit von in dem Kanal (14) vorliegenden Massedruck gegen den Schieber (61) pressbar ist.

7. Einrichtung nach Anspruch 6,
**dadurch gekennzeichnet,**
**daß** der Dichtungsring (81) aus zwei Dichtungsteilen (82, 83) besteht, wobei das eine Dichtungsteil (82) dachförmig ausgestaltet ist und das zweite Dichtungsteil (83) eine Dreiecksform besitzt,
**daß** sich die eine Dachseite des dachförmig ausgestalteten Dichtungsteils (82) am Gehäuse (18) und die andere Dachseite an einer Seite des zweiten Dichtungsteils (83) abstützt, und
**daß** das eine Dreiecksform besitzende zweite Dichtungsteil (83) mit der zweiten Seite gegen das Gehäuse (18) und mit der dritten Seite gegen den Schieber (61) preßbar ist.

8. Einrichtung nach Anspruch 7,
**dadurch gekennzeichnet,**
**daß** der Dichtring (81) aus Titan besteht.

9. Einrichtung nach Anspruch 4,
**dadurch gekennzeichnet,**
**daß** der 3-Wege-Hahn (33) als Kugelhahn (32) ausgestaltet und mit einem Speicher (41) verbindbar ist, und
**daß** an dem Speicher (41) Verstellelemente (42) angeschlossen sind, die steuerungsmäßig mit dem Kugelhahn (32) verbunden sind, so daß das Volumen und der Druck im Speicher (41) vorgebbar einstellbar sind.

10. Einrichtung nach Anspruch 9,
**dadurch gekennzeichnet,**
**daß** der Speicher (41) als Kolben-Zylinder-Einheit (43) ausgebildet ist.

11. Einrichtung nach Anspruch 10,
**dadurch gekennzeichnet,**
**daß** die Kolbenstange (44) der Kolben-Zylinder-Einheit (43) an einen hydraulischen Antrieb (51) angeschlossen ist.

12. Einrichtung nach Anspruch 10,
**dadurch gekennzeichnet,**
**daß** die Kolbenstange (44) der Kolben-Zylinder-Einheit (43) an einen elektrischen Antrieb (52) angeschlossen ist.

13. Einrichtung nach den Ansprüchen 11 oder 12,
**dadurch gekennzeichnet,**
**daß** die Kolbenstange (44) in einem Bereich aus einem Material (46) besteht, mit dem der Kolben (45) von dem Antrieb thermisch trennbar ist.

## Claims

1. Process for filtering plastics in injection moulding machines in which a filter element (21) is positioned between the plasticizer unit (11) and the die cavity (17),
**characterised by** the following steps:
a) the new filter element (21) is pre-heated and held in readiness
b) the used filter element (22) is moved out of the compound flow channel and is replaced by the new element (21) in the same position
c) the new filter element (21) is moved into the compound channel, and compound is admitted to it, said compound being diverted, in front of the die cavity (17), into an injection receptacle (37)
d) step c) is repeated until the compound is identified as being in a suitable state and fed directly to the die cavity (17)
e) the supply feed to the die cavity (17) is closed after each shot
f) the casting process is repeated until the filter element is worn out.

2. Process as in Claim 1,
**characterised by** the fact
that thermal influence is brought to bear on the compound while it is passing through the filter element (21).

3. Process as in Claim 2,
**characterised by** the fact
that the compound within the filter is heated from the outside in a ring shape.

4. Device for filtering plastics in injection moulding machines with a plasticizer unit (11), a nozzle (15) which is linked to a die cavity (17), and a filter element (21) which is positioned in the connecting conduit (35) in a channel (14) between the plasticizer unit (11) and the nozzle (15), and in which is mounted a slider (61), for the purpose of carrying out the process in accordance with Claim 1,
**characterised by** the fact
that a three-way valve (33) is fitted in the connecting conduit (35) after the filter element (21) in the direction of movement of the compound, having a branch conduit (36),
that the three-way valve (33) links, in one position, the plasticizer unit (11) with an injection receptacle (37) via the branch conduit (36),
that the slider (61) can be moved perpendicular to the main central axis (I) of the connecting conduit (35) and can be brought into a position where the holder for the filter element corresponds, outside the compound channel, with a piston-shaped slider unit (66) by means of which the used filter element (22) can be pushed out and a new filter element (21) inserted,
and that the slider unit (66) has a pre-heating device (71) in the area of the filter mounting (63).

5. Device as in Claim 4,
**characterised by** the fact
that the slider (61) has a filter-heating device (72) in the area of the holder (62) of the filter element (21).

6. Device as in Claim 4,
**characterised by** the fact
that, inside the casing (18), a sealing ring (81) consisting of at least two parts rests against the opening of the channel (14) on the side facing the plasticizer unit (11), and can be pressed against the slider (61) in dependence on the pressure of the compound in the channel (14).

7. Device as in Claim 6,
**characterised by** the fact
that the sealing ring (81) consists of two sealing components (82, 83), one component (82) being roof-shaped and the second component (83) having a triangular shape,
that one of the sides of the roof-shaped sealing component (82) rests against the casing (18) and the other side against one side of the second sealing component (83), and
that the second side of the second - triangular - sealing component (83) can be pressed against the casing (18) and the third side can be pressed against the slider (61).

8. Device as in Claim 7,
**characterised by** the fact
that the sealing ring (81) is made of titanium.

9. Device as in Claim 4,
**characterised by** the fact
that the three-way valve (33) is in the form of a ball valve (32) and can be connected to a reservoir (41), and
that regulating elements (42) are connected to the reservoir (41), which are linked in a controlling manner with the ball valve (32) in such a way that the volume and pressure in the reservoir (41) can be pre-set.

10. Device as in Claim 9,
**characterised by** the fact
that the reservoir (41) is in the form of a piston-cylinder unit (43).

11. Device as in Claim 10,
**characterised by** the fact
that the piston rod (44) of the piston-cylinder unit (43) is connected to a hydraulic drive unit (51).

12. Device as in Claim 10,
**characterised by** the fact
that the piston rod (44) of the piston-cylinder unit (43) is connected to an electrical drive unit (52).

13. Device as in Claims 11 or 12,
**characterised by** the fact
that the piston rod (44) consists, in one area, of a material (46) with which the piston (45) can be thermally separated from the drive unit.

## Revendications

1. Procédé pour filtrer des matières synthétiques dans des machines de coulée par injection, dans lesquelles, entre l'unité de plastification (11) et la cavité du moule (17), il est agencé un dispositif de maintien recevant un élément de filtrage (21),
**caractérisé par** les étapes suivantes :
(a) l'élément de filtrage neuf (21) est maintenu en disponibilité de façon préchauffée,
(b) l'élément de filtrage (22) consommé, sorti du canal de masse, est échangé, au niveau de la même position, contre l'élément neuf (21),
(c) l'élément de filtrage neuf (21) est introduit dans le canal de masse et alimenté en masse de coulée, qui est renvoyée, avant la cavité du moule (17), dans un récipient d'injection (37),
(d) l'étape (c) est répétée jusqu'à ce que la masse de coulée, reconnue comme appropriée, soit amenée directement à la cavité du moule (17),
(e) après chaque cycle de moulage, l'amenée à la cavité du moule (17) est fermée,
(f) le processus de coulée est répété jusqu'à ce que l'élément de filtrage (21) soit consommé.

2. Procédé selon la revendication 1,
**caractérisé en ce que** la masse de coulée est thermiquement influencée pendant sa traversée de l'élément de filtrage (21).

3. Procédé selon la revendication 2,
**caractérisé en ce que** la masse de coulée se trouvant dans le filtre est réchauffée de façon annulaire de l'extérieur.

4. Dispositif pour filtrer des matières synthétiques dans des machines de coulée par injection, comportant une unité de plastification (11), une buse (15) reliée à une cavité de moule (17), et un élément de filtrage (21) agencé dans le conduit de liaison (35) dans un canal (14) entre l'unité de plastification (11) et la buse (15), qui est monté dans un coulisseau (61), pour la mise en oeuvre du procédé selon la revendication 1,
**caractérisé en ce que**, dans le conduit de liaison (35), dans la direction de transport de la matière, après l'élément de filtrage (21), il est agencé un robinet à trois voies (33) avec une dérivation (36), **en ce que**, dans une position de commutation du robinet à trois voies (33), l'unité de plastification (11) est reliée, par l'intermédiaire de la dérivation (36), à un récipient d'injection (37), **en ce que** le coulisseau (61) est déplaçable perpendiculairement à l'axe principal (I) du conduit de liaison (35) et peut être amenée dans une position dans laquelle son récepteur pour l'élément de filtrage à l'extérieur du canal de masse correspond à une unité de déplacement (66) du type piston, à travers laquelle l'élément de filtrage consommé (22) peut être évacué et un nouvel élément de filtrage (21) peut être mis en place, et **en ce que** l'unité de déplacement (66) présente, dans la zone du support de filtre (63), un dispositif de préchauffage (71).

5. Dispositif selon la revendication 4,
**caractérisé en ce que** le coulisseau (61) présente, dans la zone du récepteur (62) de l'élément de filtrage (21), un dispositif de chauffage de filtre (72).

6. Dispositif selon la revendication 4,
**caractérisé en ce que**, dans le carter (18) à l'embouchure du canal (14) sur le côté en regard de l'unité de plastification (11), s'appuie une bague d'étanchéité (81) au moins en deux parties, qui peut être pressée contre le coulisseau (61) de façon dépendant de la pression de masse régnant dans le canal (14).

7. Dispositif selon la revendication 6,
**caractérisé en ce que** la bague d'étanchéité (81) est constituée de deux parties d'étanchéité (82, 83), une partie d'étanchéité (82) étant réalisée en forme de toit et la seconde partie d'étanchéité (83) présentant une forme triangulaire, **en ce qu'**un côté de la partie d'étanchéité (82) réalisée en forme de toit s'appuie contre le carter (18) et l'autre côté sur un côté de la seconde partie d'étanchéité (83), et **en ce que** la seconde partie d'étanchéité (83) possédant une forme triangulaire peut être pressée par le second côté contre le carter (18) et par le troisième côté contre le coulisseau (61).

8. Dispositif selon la revendication 7,
**caractérisé en ce que** la bague d'étanchéité (81) est constituée de titane.

9. Dispositif selon la revendication 4,
**caractérisé en ce que** le robinet à trois voies (33) est réalisé comme robinet à boisseau sphérique (32) et peut être relié à un réservoir (41), et **en ce que** des éléments de réglage (42) sont raccordés au réservoir (41), qui sont reliés, par commande, au robinet à boisseau sphérique (32), de sorte que le volume et la pression dans le réservoir (41) peuvent être réglés de façon pouvant être prédéfinie.

10. Dispositif selon la revendication 9,
**caractérisé en ce que** le réservoir (41) est réalisé comme vérin (43).

11. Dispositif selon la revendication 10,
**caractérisé en ce que** la tige de piston (44) du vérin (43) est raccordée à un entraînement hydraulique (51).

12. Dispositif selon la revendication 10,
**caractérisé en ce que** la tige de piston (44) du vérin (43) est raccordée à un entraînement électrique (52).

13. Dispositif selon la revendication 11 ou 12,
**caractérisé en ce que** la tige de piston (44) est constituée, dans une zone, d'une matière (46) grâce à laquelle le piston (45) peut être séparé thermiquement de l'entraînement.
